# EUROPEAN PATENT SPECIFICATION

(11) **EP 1 902 624 B1**
(45) Date of publication and mention of the grant of the patent: **14.12.2016**
(21) Application number: 07116723.3
(22) Date of filing: 19.09.2007
(51) Int. Cl.: A23C 19/068, A23C 19/16, A23C 19/093, A23C 19/09, A23L 3/005, A23L 3/3463

(54) **Semi-hard or hard cheese product in a casing and the preparation thereof**
Halbhartes oder hartes Käseprodukt in einem Gehäuse und dessen Herstellung
Produit de fromage ferme ou semi-ferme dans une boîte et sa préparation

(30) Priority: 20.09.2006 EP 06120981
(43) Date of publication of application: 26.03.2008
(73) Proprietor: FrieslandCampina Nederland B.V., 3818 LE Amersfoort (NL)
(72) Inventor: Mens, Alexander Maria, 5612 HW Eindhoven (NL); Penders, Johannes Antonius, 5324 AV Ammerzoden (NL); Faber, Timo Joost, 4811 KB Breda (NL)
(74) Representative: Nederlandsch Octrooibureau

(56) References cited:
- EP-A2- 0 304 119
- EP-A2- 0 384 553
- EP-A2- 1 057 411
- CH-A- 399 152
- DE-A1-102004 060 111
- FR-A1- 2 710 820
- GB-A- 2 309 880
- US-A- 5 194 283
- US-A1- 2005 271 789

## Description

### FIELD OF THE INVENTION

The invention pertains to semi-hard or hard cheese products in a casings, and to the preparation of such products.

### BACKGROUND OF THE INVENTION

Conventional cheese processing involves the formation of a cheese curd from milk. Customarily, pasteurized milk is inoculated with a cheese starter culture of a selected micro-organism, optionally pre-acidifying the milk, adding rennet or another suitable coagulant to the milk to form a curd. Thereafter, the coagulated milk is subjected to cutting and draining to remove excess whey from the curd.

Characteristic for "soft" or "process" cheese is the following curd heating, until a uniform plastic cheese mass is obtained. It is sometimes packed in the shape of a sausage, having a paste-type or fluid consistency. In US 4,303,711 soft cheeses are introduced in casings in molten state at 70 - 95 °C. Inherent to the production of such cheese, it involves no subsequent ripening. Even if desired, the bacteria responsible for ripening would not survive the preceding heat treatment. The casing serves the purpose of packing a foodstuff, like it is known for sausage.

FR-A-2.710.820 teaches packing a semi-soft or soft cheese, such as Camembert, Brie or Munster, in a casing for mould growth. The mould is developed in about 10 - 15 days, at 12 - 13 °C and 90 - 95 %RH.

Bacterial ripening plays a predominant role in the field of semi-hard and hard cheese manufacture, after curd processing. Curd processing in Cheddar manufacture (see e.g. GB 1,069,081) involves "cheddaring" and milling, i.e. feeding the cheese curd to a curd mill which breaks up and crumbles the curd. The crumbled curd is then discharged from the mill and intimately mixed with salt ('dry salting') and filled into moulds. Curd processing in Dutch cheese manufacture, to obtain e.g. Gouda or Edam, is completely different there from. Residual whey is removed by heating, stirring and washing the cheese curd until it is a homogeneous mass having a moisture content that meets the appropriate standard for the cheese being made. The drained curd is pressed and brined.

Either way, the semi-hard or hard cheese thus formed is then subjected to natural ripening, or for that matter, foil ripening. Natural ripening involves the use of a cheese coating, to protect cheese and to develop taste and a typical rind. The coatings are typically based on special grade water-based polyvinylacetate copolymer dispersions. The semi-permeable coating protects the cheese from mould growth and excessive weight loss. The product is coated immediately after the brine bath and depending on the type of cheese and storage conditions several coatings are applied during the ripening process. These coatings are water-soluble, and therefore, cannot withstand brine solution. Hence, it is no option to use these kinds of coatings in preceding moulding steps.

Alternatively, cheese may be foil-ripened, to obtain a rindless cheese. Examples thereof are given in EP-A-384.553, EP-A-304.119 and CH-399.152. Materials suitable for use therein are gas-permeable, and water-permeable to a lesser extent, if at all. These shrink foils are applied after moulding only.

For sake of completeness, DE 10 2004 060 111, involves a combination of the afore-described foil ripening and natural ripening, in the field addressed as "combi ripening".

Although more customary for process cheeses, WO-A-98/06271 mentions the use of casings for hard cheeses. However, casings are applied to finished cheese, after ripening, as an alternative to the wax coatings often applied for conservation purposes. In that, the function of the casing does not differ from that reported above, for process cheese. WO-A-98/06271 does not teach the use of casings to ripen a cheese, let alone does it give details on tackling problems such as mechanical hole formation and loss of consistency encountered when incorporating a casing step in the conventional semi-hard or hard cheese manufacturing process.

GB-A-2,309,880 discloses a method of forcing curdled milk under pressure into a casing, to squeeze out the curd by the counter-pressure of the casing, and to expel the whey. Advantageously, the cheese may be moulded in the casing. However, GB-A-2,309,880 teaches to cut up the casing into small slices, brined or salted and inoculated. This leaves the cheese still unprotected during subsequent ripening. Lacking any detail, the ripening step is still regarded to encompasses conventional natural or foil ripening, in case of a semi-hard or hard cheese. Moreover, the curd is pressed into the casing without any pre-treatment. The crumbly nature of curd may hamper the filling process.

Also in the field of curd processing, US-A-2004/0258798 discloses a method for making cheese, including mixing cheese curd with whey protein. By applying a negative pressure to the mixture, whey proteins are forced into the cheese curd. Probiotics, fat substitute, enzymes and flavourings may be treated likewise. After the treatment, the cheese curds are then processed in a conventional manner to form blocks of cheese. The major concerns of US-A-2004/0258798 are bacterial contamination of finished cheese, reintroduction of whey proteins into cheese and maximization of yield. Therein, the moisture content (> 20 %) is standardized to the maximum allowable limit of the finished cheese. However, an increased whey protein content is not desirable for natural ripened cheese, since it has a negative effect on its organoleptic properties. According to Walstra P. et al. "Dairy Technology", publisher Marcel Dekker (1999) p.615, whey proteins (serum proteins) are not prone to proteolysis. Moreover, an artificially high moisture content at the beginning of the ripening step would also affect the remainder of the process and the taste of the ripened cheese.

US 5,194,283 describes a co-extrusion process for the production of semi-hard cheese from a predominantly rennet curd, and subsequent ripening in a pack. The moulding or pressing is replaced by curd grinding, to obtain fine grains which are then salted and worked. Grinding may be achieved by a vacuum-type meat filling machine, see e.g. example 1. The thus obtained grains are deposited on a conveyor belt. The ground curd is then vacuum wrapped in a film which is selected to prevent drying of the product, and which is impermeable to water vapour and oxygen. Hence, in other words, US 5,194,283 still teaches foil ripening.

In the art there is a continuous need to improve, fasten and simplify the ripening process of cheese, especially of the semi-hard and hard type, while maintaining the body, texture and organoleptic properties of regular cheese. There is also a need to homogenize the distribution of additives in the cheese, to use lower concentrations of additives in the manufacturing, and to lower the risk of bacterial contamination in and after manufacturing. Finally, new and attractive cheese forms are highly desirable.

### SUMMARY OF THE INVENTION

It is the inventors' findings that the aforementioned disadvantageous in semi-hard or hard cheese manufacture may be solved by performing at least part of the draining of the curd and any subsequent steps, including ripening, in a casing. Here below, such ripening will be referred to as "casing ripening". During curd processing, the casing may conveniently be applied to shape the cheese, and in subsequent ripening, it takes over the role of conventional shrink foils or waxes which are only applied after moulding of the cheese. However, it is emphasized that the casings are not just an alternative to foils or waxes, but bring more advantages to the preparation process and the end-product.

For instance, the amended cheese manufacture with a casing ripening gives the possibility to introduce additives into the cheese, in a homogeneous manner.

Another advantage is the ease of processability of the cased cheese over cheese blocks during ripening. Similar to the smoking of sausage casings, cheese casings may for instance be hung up to ripen, which makes the cheese accessible from all sides, whereas conventional cheese block ripening involves numerous turnovers of the cheese.

Still another advantage of cheese in casing is that its special shape - e.g. a constant diameter and a long length - improves the handling of the product for retail purposes.

To some extent the casing of cheese according to the invention resembles that of conventional filling of sausage casings. However, it is found that the implementation in the field of semi-hard cheese manufacture requires amendments: As mentioned above, the crumbly nature of the cheese curd may trouble the filling process and hampers the homogeneous uptake of additives. Therefore, the process of the invention uses granular cheese technology in combination with filling of the curd into a casing. Prior to casing, the drained curd is processed in a controllable way in order to obtain a large fraction of singular curd grains. The actual fusion or setting of the curd grains takes place during and after filling into the casings.

Therein, it was found essential that, during filling, the curd grains should be forced to fuse at a temperature of at least 10 °C, in order to make the curd grains stick together again, in a way that the resulting cheese maintains its body, texture and organoleptic properties. Therein, it is deemed necessary to apply an underpressure (back pressure). At lower temperatures and in absence of underpressure the curd keeps its crumbly and granular character, upon filling creating an unacceptable cheese with mechanical holes. Fusion is greatly improved with increasing temperature.

### DETAILED DESCRIPTION OF THE INVENTION

It is an object of the invention to provide a process for forming and ripening semi-hard or hard cheese which fulfils the above wishes and solves the problems mentioned in the background to the invention. It is also an object to provide a cheese with a homogeneous texture and taste distribution.

The invention thus pertains to a process of manufacturing semi-hard or hard cheese in casing, comprising providing a curd/whey mixture, draining said mixture to obtain drained curd grains, where after said drained curd grains are filled into a casing having a water permeability of at least 100 g/m2 per day, said filling optionally preceded by a mixing step, wherein the filling step is performed at a temperature in the range of 10 - 45 °C and at an underpressure of 0.1 - 1.0 bar, and wherein the completely cased cheese is subjected to ripening.

The invention also pertains to a semi-hard or hard cheese product in casing, obtainable by this process.

### Semi-hard or hard cheese

The invention is not particularly limited to a type of cheese, provided it is in a form which in the field is considered as a semi-hard or hard cheese. The fat content of the end product, i.e. a "casing ripened cheese", ranges from 0 to 55 wt% on total solids, although in current cheese technologies 10 % fat is the lower practical limit. However, the invention may well be applied in cases where lower amounts of fat are applied.

With "semi-hard" and "hard" cheeses are generally understood cheeses having a moisture content of 25 - 45 % and 45 - 60 %, calculated on dry solids, respectively.

The semi-hard or hard cheese of the invention are subjected to bacterial ripening for at least 6 weeks, more preferably at least 8 weeks. These bacterial-ripened cheeses unmistakably distinguish from fresh, soft or process cheeses. Bacterial-ripened cheese of the invention is also different from mould ripened cheeses such as Camembert, Brie, Roquefort, Munster etc..

The semi-hard and hard cheeses are further classified having a moisture fat-free content (MFFB) of 54 - 63 % and 49 - 56 %, respectively. The MFFB value equals 100% * weight of moisture in the cheese / (total weight of cheese - weight of fat in cheese).

The invention is found particularly suitable for a semi-hard cheese of the Gouda type or Edam type, including Milner cheese, due to its constant and flexible texture. The mixture of curd and whey is provided for in semi-hard Dutch(-type) cheese manufacture by mixing (skimmed) milk with a starter containing mesophilic bacteria, and subsequent setting. Terms such as "Edam", "Gouda" and "Milner" are directly and unambiguously clear to the skilled person in the field, supported by common general knowledge from e.g. Walstra et al. in chapter 2 of "Cheese: Chemistry, Physics and Microbiology, Volume 2, Major cheese Groups, ed. P.F. Fox, Chapman & Hall, ISBN 0 412 53510 6 (V.2)". Alternatively, numerous state-regulated cheese standards, such as the US - 21 C.F.R. 133 describe and define the ingredients and manufacturing processes marking these varieties. Gouda and Edam are well-described in Codex Stan C-5-1966 and C-4-1966, respectively. The preferred finished, casing ripened cheese may be referred to as a Gouda- or Edam-type.

The invention will now be discussed in terms of its process features.

The curd/whey mixture which is subjected to drainage, optionally mixing, and casing according to the present invention may be produced in accordance with traditional cheese manufacturing. The cheese is shaped during filling, and the curd grains fuse during or after filling. The shape of the cheese is typically tubular, but other shapes, such as bars, blocks, discs, spheres, etc. are also possible, provided that the cheese is fully covered by a casing during ripening.

The following brining and ripening of the cheese may be performed using traditional means.

Where conventional cheese preparation involves pressing and moulding of the drained curd, the curd may now be subjected to a mixing, and following casing and fusing. The casing results in a favourable cheese surface area to volume ratio over conventional plastic-wrapped blocks, which ratio may contribute to the efficiency of diffusion-controlled brining in terms of speed and homogeneity. As a result, the salt content of the cheese can be lowered with e.g. 10 - 30 % compared to conventional amounts. For a Milner 30+ the amount of salt is traditionally about 3.5%. A more efficient brining step lowers the risk of bacterial contamination in the finished cheese. However, it is considered within the merits of the skilled person's knowledge to determine the exact brining conditions, including the amounts of salt required.

As discussed above, the cased cheese may be hung up to ripen, which makes the cheese accessible from all sides. Yeast and mould-inhibiting agents such as natamycin may be sprayed onto the cheese casings during ripening, making plastic coatings as part of the cheese rind superfluous. It also enables better control of the amounts of such agents. Hence, it is preferred that during ripening of the cased cheese the casings are at least once sprayed with natamycin.

### Draining

A "drained curd" preceding the mixing treatment of the invention is understood to comprise curd which is obtained using conventional drainage methods. Such drained curd varies in moistures content from 40 - 70 %; the level is dependent on the fat content. Some guidance: for 0+ curd 66 %, 30+ curd 58 %, 45+ curd 51 %, and 48+ curd 48 %. Cheeses obtained by drained curds are characterised by an average moisture content of 40 - 65 % (61 % for 0+, 55 % for 10+, 50 % for 30+ and 44% for 45+ and 42 % for 48+/50+) at an age of 2 weeks, while their pH is typically in the range of 5.0 - 5.6. The qualification "+" implies an upward margin of 4 %. Hence, 0+ cheese accordingly contains 0 - 4 wt% fat, based on its dry matter. The preferred size of the curd grains at the end of the draining processing in cheese vats is in the range of 0.5 - 12 mm, preferably on average about 5 mm.

For drainage, use can be made of the curd preparation and feeding system according to US-A-2005/0274264, where applied for producing Cheddar or Pasta Filata. The apparatus is suitable for preparing curd and feeding curd to a curd processing apparatus, whereby the pump-out time of a curd tank, sometimes addressed as a curd vat, is as short as possible without the curd structure being damaged. Modifications will readily occur to those skilled in the art. For instance, the number of curd tanks may vary, or additional curd pumps may be applied, provided that the curd grains may be sized down to fit within the range of the invention. The temperature during draining is preferably between 10 and 45 °C.

In a preferred embodiment at least part of the drainage process is performed by a treatment over a draining screen. The draining screen is typically in the form of a curve. It is a gravity type liquid separator, known e.g. from the field of waste water discharge. In curd processing, the curd flows down the curve due to gravitation forces, and on the way down the remaining whey is filtered out through special grids in the curve profile. For the purpose of whey removal a grid size of 0.6 mm is found particularly useful. Other gravity type liquid separators may be used likewise. An example of a suitable draining screen has a radius of 2000 mm, width 600 mm, length 1500 mm and a capacity of 10 m³/h, commercially available from Lehman BV (Rijswijk, NL). It is even more preferred that the complete drainage step is performed over a draining screen. Its capacity may well have to be adapted for that purpose.

Prior to the treatment on the draining screen it is an option to apply continuous cooling of the curd grains for instance in a tubular heat exchanger, to temporary inhibit fusion of the grain curds at this stage. There is a natural tendency for curd grains to fuse, which at this stage is to be avoided because of the need for further mixing and homogenization and for better control of the actual fusion process. During cooling, a temperature of 10 - 20 °C is preferred, in particular at most 15 °C. Such use of a continuous heat exchanger may especially be required if the draining screen is performed continuously, while subsequent mixing is applied batch-wise.

### Mixing

Yet another advantage of the new process is that the drained curd grains may optionally be mixed prior to filling, thus creating the opportunity to add (water-soluble) additives after drainage, therewith avoiding spoilage of these additives in the whey removal step. Contaminants in the whey are undesirable from the point of view of whey valorisation. While some kind of mixing is achieved in the traditional Cheddar manufacture, conventional semi-hard Dutch cheese manufacture does not provide for such mixing. By mixing e.g. health-contributing additives into the curd grains the homogeneity throughout the (ripening) curd thus established is far better than that reported in the art, where additives to the drained curd are added and the mixture as a whole is pressed together in a mould.

The mixing step after drainage is performed to an extent to distribute additives homogeneously distributed throughout the curd, and to counteract uncontrolled curd fusion. The mixing step is carried out at low shear conditions in order to prevent the curd structure of being damaged due to an unduly high speed or movement and/or acceleration.

In a particularly preferred embodiment curd processing in the context of the invention involves a draining screen and a mixer, such as a paddle mixer which is commonly applied in meat processing industry. A mixing unit with temperature control can e.g. be applied. A suitable example is a paddle mixer with a double wall from Convenient Food Systems (Bakel, NL). In the mixer additives can be applied and the temperature may be regulated. The residence time is typically 5 - 10 minutes. Care must however be taken to prevent curd damaging.

During such mixing, the temperature is preferably maintained at 10 - 45 °C, more preferably 20 - 40 °C, in particular 30 - 35 °C. Within this range, the temperature may be varied during the various steps in mixing. The pH is typically in the range of 5.5 - 6.5. There is no need for vacuuming in this step.

Fusion can also be induced after mixing and subsequent filling of the casing e.g. by application of heat by radiation, e.g. microwave or infrared. Also in this case, the temperature is preferably adjusted to 30-35°C.

As mentioned before, mixing beneficially involves adding to the drained curd all kinds of (health-improving) additives such as prebiotics, probiotics, flavourings, oils, dairy cream, fat substitutes, such as inulin, and other non-milk based ingredients that are nowadays regarded as contributing to the consumer's well-being. Those skilled in the art will be familiar with numerous suitable ingredients which may be used in accordance with the principles of the present invention. As an example, sunflower oil can be to incorporated into the cheese curds during mixing. It has been found that by doing so, the amount of salt used in the subsequent brining step may be reduced by more than 30 %, from 3.5 % to 2.3 % or less in case of Milner 30+. The amount of sunflower oil may be between 1 and 10 wt%, especially between 1.5 and 6 wt%, based on the dry matter of the cheese after 2 weeks of ripening.

The curd grain size suitable for subsequent casing may be determined by sieving. The curd grains preferably have a size between 0.5 and 12 mm. It is found that best casing results are obtained with curd grains having a size between 3 and 7 mm.

### Casing

As immediately clear from the wording "filling said drained curd grains into a casing before ripening, said filing optionally preceded by a mixing step", drainage is not followed by a traditional pressing and moulding step.

The casing step involves a pre-setting of the curd grains and the actual filling of the casing, where setting or fusion is continued. "Setting" or "fusion" is understood to comprise the step of growing the singular curd grains together to form a consistent and closed or blind curd body again. The filling of the casing is preferably performed at a temperature in the range of 10 - 45 °C, more preferably 20-40 °C, most preferably 30 - 35 °C.

During fusion an underpressure of 0.6 - 1.0 bar is preferred. Inherent to the wording "underpressure" (in Dutch: "onderdruk"), it is the difference with the atmospheric pressure. Hence, an underpressure of 1.0 bar would correspond to complete vacuum. Worded differently, a pressure of 0 - 0.4 bar is preferred. Up to present, for semi-hard or hard cheeses such as Maasdam, Edam or Gouda, curd processing usually involved no or mild vacuum, in order to prevent the cheese structure from damaging.

Air enclosed during mixing can be removed by means of the underpressure, which air would otherwise cause irregular hole formation. The pH is typically in the range of 5.5-6.5.

Although the filling step may in principle be performed by hand, it is preferred to use a vacuum filling device for fusion of the drained curd grains. Fusion may be controlled in the supply line of the device, provided that pressure and temperature are controllable parameters. Devices of this kind are known from the field of casing sausages. The device for filling casings is part of a filling machine, with the aid of which casing of artificial material (artificial casing) or natural casing can be filled with the curd grains and "twisted off" in such a manner that separable, filled segments of, to the greatest possible degree, equal length and weight are formed, which segments can be separated from each other in order to form individual cased cheeses. The machine for filling cheese casings usually shows a filling pipe that is rotatable and driveable around its longitudinal axis, onto which pipe a casing fillable through the filling pipe can be drawn up, and a casing take-along apparatus, rotatable simultaneously with the filling pipe, for turning the casing. More details are given in US 6,132,302, but the invention is not particularly limited to the type of casing device disclosed therein. A non-limiting example of such a vacuum filling device is that of Handtmann (Biberach, Germany). It is especially preferred to make use of a casing fixation device in line with the vacuum filling device, for better control of the filling and shape of the cheese.

While filling, care must be taken to avoid an excessive filling rate, since too high a speed would disadvantageously induce irregular hole formation in the curd body. On the other end, low filling rates are at the risk of drying out of the curd. The filling rate is typically 500 - 1000 liter curd per hour. However, the actual filling rate is dependent on the other filling conditions, and can easily be determined by the skilled person.

### Casing material

Firstly, in selecting the most suitable casing candidate for a casing material, its gas and water permeability are important concerns. The casing should be both gas and water permeable. Water or moisture permeability is desired in order to allow for diffusion of salt into the cheese at satisfactory levels during the subsequent brining step. Gas permeability is desired to prevent air entrapment during ripening, which may ultimately lead to bursting of the casing. The material used has a water permeability of at least 100 g/m² per day, more preferably at least 200 g/m² per day, as measured in accordance with ASTM at 38 °C and 90% RH. The desired water permeability makes shrink foils as applied in traditional foil ripening unsuitable, since these commonly exhibit a water-permeability of 15 - 20 g/m² per 24 hrs. Shrink foils are intended to minimize water loss during ripening. It is clear from the above that shrink foils are not to be misinterpreted for casings.

Secondly, the casing is to withstand brining conditions, and has a packing function.

Thirdly, the casing must be adequately resistant to the temperatures and pressures to which it is exposed when introducing the curd grains, so that the casing does not burst or tear at these conditions. This has never been a criterion for foil ripening before, since the cheese was always pressed and moulded before it was wrapped in a shrink film or bag.

Yet another difference between traditional foils and the casings of the invention is that heat-shrinkability does not play a significant role , if at all. Therefore, casings preferably have a heat-shrinking rate of less than 30 %, more preferably less than 20 %, most preferably less than 10 %, in particular less than 5 %, at the maximum processing temperature. Note that heat-shrinkability is not to be confused for stretchability.

Casings as commonly applied for past-type foodstuffs such as sausage and melt cheeses are well suitable for the purpose of the invention. Traditionally casings were associated with cleaned and salted animal intestines. These natural casings are nowadays often replaced by synthetic counterparts, e.g. cellulose derivatives. Both natural and synthetic casings may be applied, and a synthetic casing preferably contains collagen and/or cellulose as a base material. It is typically a tubular film which is produced by shaping the casing and subjected it to biaxial stretching according to processes that are known per se. Examples thereof are given in US 4,303,711 and WO-A-98/06271, but the invention is not limited thereto. The casing may be provided internally with a releasing agent to increase peelability, or other means to promote detachment.

Particularly suitable is the fibrous cellulose casing commercially available as "Walsroder FR natur" by Bayer Global Wolff Walsrode AG (Walsrode, Germany), which has a high size consistency and good machinability, high mechanical strength and smoke permeability, obviously in relation to sausage processing. For cheese it is found to result in an end-product with a homogeneous moisture distribution.

### Casing ripening

During casing ripening, the cased cheese is completely covered by casing material, thus shielded from the environment. Substantial drying and rind formation is thus prevented.

The (bacterial) casing ripening involves temperatures which correspond to traditional natural ripening, preferably 12 - 14 °C for a predominant period, preferably more than 80 %, more preferably the complete ripening period of a Gouda or Edam.

It is preferred that the cased cheese is subjected to ripening inside the casing for at least 60%, more preferably for at least 80%, most preferably at least 90% of the total ripening period. In theory, the remainder of the ripening period may comprise natural ripening, foil ripening, or a combination of both. Given the process of the invention, the ripening period commences with casing ripening.

However, in the most preferred embodiment, the ripening period is completely formed from casing ripening. In absolute numbers, it is preferred that casing ripening lasts for at least 4, more preferably at least 6 weeks.

### Casing ripened cheese product

The invention further pertains to a semi-hard or hard cheese product in a casing obtainable by the process of the invention, in particular containing a cheese of the Gouda type or Edam type, having 0 - 55 %, more preferably 10 - 55 % fat content, based on total solids, for example 10- 30 %, or alternatively 30 - 50 % fat content. A medium fat cheese having a fat content, ion total solids, between 28 and 35%, such as a Milner cheese, is also part of the invention. A cheese ripened in a casing may be characterized by the gas- and water-permeable properties of the applied casing. The cased cheese may be tubular shaped, e.g. having a length of at least twice the diameter of the tube, up to e.g. 6 times the diameter.

Since the new process allows for homogeneously incorporating all kinds of ingredients in the curd granulation step, these additional ingredients may lead to a product which from a commercial point of view is no longer regarded as cheese but rather as a product thereof. Therefore, the cased cheese of the present invention will be addressed in the context of the invention as a "cheese product". However, the cheese will still form its main ingredient and will remain perceptible organoleptically and visually, by its body and texture. The fat content of the cheese ranges from 0 - 55 %, preferably 10 - 55 % on total solids. The cheese body is virtually blind, that is, there are almost no irregular (mechanical) holes present. It is preferred that a cross-section exhibits less than 5 irregularly shaped holes of length/diameter ranging from 1 to 30 mm per dm², most preferably exhibits no irregularly shaped holes of length/diameter ranging from 1 to 30 mm per dm² at all.

The cheese is rindless if non-permeable casing is applied The occurrence of round smooth "eyes" due to the gas formation of microorganisms during the ripening of the cheese is however allowed for. It is considered with the merits of the skilled person's knowledge to recognize the difference between the gas-induced eyes and mechanical hole formation.

After brining, the cheese has a salt content of 2 - 4 % on total solids, and has a pH preferably in the range of 5.0 - 5.6.

### EXAMPLES

### Example 1

Cased Milner 30+ cheese was prepared by coagulating milk, and cutting and draining the curd/whey mixture thus obtained according to the traditional recipe. The curd was drained using a draining screen (Lehman BV, Rijswijk, NL); radius 2000 mm, width 600 mm, length 1500 mm; capacity of 10 m³/h) and fed to a paddle mixer. The drained curd contained 58 % moisture. The curd was mixed during 5 minutes, while the temperature was maintained at around 30 °C. The average particle size of the curd was about 4 mm, as determined by sieving. The pH of the curd was around 5.9.

The curd grains were fed to a vacuum filling machine (Handtmann VF50, Biberach, DE). An underpressure of 0.8 bar was maintained. At a filling rate of 30 % (15 l/min) the curd was vacuum filled into the casings within a period of 15 minutes. Optionally a cover was used on the vacuum filling machine to subject the curd in the funnel of the machine to an underpressure (0.5 bar) for 5 - 15 min.

The curd is filled into a Walsroder FR Natur casing (calibre 90 mm; Bayer Global Wolff Walsrode AG, Walsrode, DE) which was handled using a casing fixation device on the end of the filling tube. The casings were soaked in water (40 °C) for around 15 - 30 minutes before filling with curd. After filling the casings were closed with a clip and left to rest for an hour. Thereafter the cheese was brined (18 °Be; pH 4.3; 13 °C) for 7 hours and ripened for 4 weeks at 13 °C and 80 % relative humidity while hanging. During ripening the cheese was treated with natamycin solution (4 g delvocid / 1 water) by spraying once a week.

The resulting cheese had a normal consistency and closed texture. It was of high quality flavour comparable to regular Milner cheese. The moisture content is 55 % with a pH of 5.2 and a salt content of 3.5 % on dry matter after two days. Its fat content was 34 %. The casings could easily be removed.

### Example 2

Cased Milner 30+ was prepared according to the process as defined in example 1, with the difference that 2 wt% and 5 wt% sunflower oil was added during mixing.

The resulting cheese had a moisture content of 53% and a salt content of 2.3 % on dry matter after 2 days. The fat content of the resulting cheese was 38 % on dry matter with 2 % sunflower oil, and 42.5 % on dry matter in case of 5 % sunflower oil. The pH of the cheese was 5.3 after two days. The cheese was characterised by a normal consistency and closed texture. The cheese had an attractive creamy taste and a healthy image (unsaturated fatty acids; reduced salt content). Furthermore, the weight shrinkage was reduced with about 20 %.

## Claims

1. A process of manufacturing semi-hard or hard cheese in casing, comprising providing a curd/whey mixture, draining said mixture to obtain drained curd grains, filling said drained curd grains into a casing having a water permeability of at least 100g/m² per day, said filling optionally preceded by a mixing step, wherein said filling step is performed at a temperature in the range of 10-45°C and at an underpressure of 0.1-1.0 bar, and wherein the completely cased cheese is subjected to ripening.

2. The process according to claim 1, wherein said draining involves a draining screen.

3. The process according to claim 1 or 2, wherein said drained curd grains are subjected to a mixing step prior to filling during which mixing step additives are mixed with said drained curd grains.

4. The process according to claim 3, wherein said mixing step involves a paddle mixer.

5. The process according to any one of claims 1-4, wherein a vacuum filing device is used in said filling step, and a casing fixation device is used in line with said vacuum filing device.

6. The process according to any one of claims 1-5, wherein during subsequent ripening of the cased cheese the casings are sprayed with natamycin.

7. A semi-hard or hard cheese product in casing, obtainable by the process according to any one of claims 1-6.

## Patentansprüche

1. Verfahren für die Herstellung von Schnitt- oder Hartkäse in einer Hülle, umfassend das Bereitstellen einer Mischung von geronnener Milch/Molke, Entwässern der Mischung, um entwässerte Weißkäsekörner zu erhalten, Einfüllen der entwässerten Weißkäsekörner in eine Hülle, die eine Wasserdurchlässigkeit von mindestens 100 g/m² pro Tag aufweist, wobei dem Einfüllen wahlweise ein Mischschritt vorausgeht, wobei der Einfüllschritt bei einer Temperatur im Bereich von 10 - 45 °C und bei einem Unterdruck von 0,1 - 1,0 bar ausgeführt wird und wobei der vollständig umhüllte Käse dem Reifen unterworfen wird.

2. Verfahren nach Anspruch 1, wobei das Entwässern ein Entwässerungssieb involviert.

3. Verfahren nach Anspruch 1 oder 2, wobei die entwässerten Weißkäsekörner vor dem Einfüllen einem Mischschritt unterworfen werden, während welchen Mischschritts Zusatzmittel mit den entwässerten Weißkäsekörnern gemischt werden.

4. Verfahren nach Anspruch 3, wobei der Mischschritt einen Schaufelmischer involviert.

5. Verfahren nach einem der Ansprüche 1 - 4, wobei eine Vakuumfüllvorrichtung in dem Einfüllschritt verwendet wird und eine Hüllefixierungsvorrichtung inline mit der Vakuumfüllvorrichtung verwendet wird.

6. Verfahren nach einem der Ansprüche 1 - 5, wobei, während des darauffolgenden Reifens des umhüllten Käses, die Hüllen mit Natamycin besprüht werden.

7. Schnitt- oder Hartkäseprodukt in einer Hülle, erhältlich durch das Verfahren nach einem der Ansprüche 1 - 6.

## Revendications

1. Procédé de fabrication de fromage à pâte demi-dure ou de fromage à pâte dure dans une boite, comprenant la fourniture d'un mélange de caillé et de lactosérum, l'égouttage dudit mélange afin d'obtenir des grains de caillé égouttés, le remplissage, avec lesdits grains de caillé égouttés d'une boite ayant une perméabilité à l'eau d'au moins 100 g/m² par jour, ledit remplissage étant éventuellement précédé d'une étape de mélange, dans lequel ladite étape de remplissage est exécutée à une température comprise dans la gamme de 10 à 45 °C et à une sous-pression de 0,1 à 1,0 bar, et dans lequel le fromage remplissant intégralement la boite est soumis à un affinage.

2. Procédé selon la revendication 1, dans lequel ledit égouttage implique un égouttoir.

3. Procédé selon la revendication 1 ou 2, dans lequel lesdits grains de caillé égouttés sont soumis à une étape de mélange préalablement au remplissage, étape de mélange au cours de laquelle des additifs sont mélangés auxdits grains de caillé égouttés.

4. Procédé selon la revendication 3, dans lequel ladite étape de mélange implique un mélangeur à palettes.

5. Procédé selon l'une quelconque des revendications 1 à 4, dans lequel un dispositif de remplissage par le vide est utilisé au cours de ladite étape de remplissage, et un dispositif de fixation de la boite est utilisé dans l'alignement dudit dispositif de remplissage par le vide.

6. Procédé selon l'une quelconque des revendications 1 à 5, dans lequel au cours de l'affinage ultérieur du fromage dans une boite, les boites sont aspergées avec de la natamycine.

7. Produit fromager à pâte demi-dure ou à pâte dure dans une boite, qui peut être obtenu grâce au procédé selon l'une quelconque des revendications 1 à 6.
